# EUROPEAN PATENT APPLICATION

(11) **EP 3 757 191 A1**
(43) Date of publication of application: **30.12.2020**
(21) Application number: 19382550.2
(22) Date of filing: 28.06.2019
(51) Int. Cl.: C09K 5/16, F24S 10/00, F28D 20/00

(54) **USE OF NI-CO MIXED OXIDES FOR THERMOCHEMICAL ENERGY STORAGE**

(71) Applicant: Fundación Centro de Investigación Cooperativa de Energías Alternativas, CIC Energigune Fundazioa, 01510 Vitoria-Gasteiz, Alava (ES); Fundación Tekniker, 20600 Eibar (Guipúzkoa) (ES)
(72) Inventor: PORTILLA NIETO, Yasmina, E-01510 Vitoria-Gasteiz, Álava (ES); ZAKI, Abdelali, E-01510 Vitoria-Gasteiz, Álava (ES); ARANZABE BASTERRECHEA, Estibaliz, E-20600 Eibar, Guipúzcoa (ES); HERNÁIZ, Marta, E-20600 Eibar, Guipúzcoa (ES); FAIK, Abdessamad, E-01510 Vitoria-Gasteiz, Álava (ES); VIDAL, Karmele, 20600 Eibar, Guipúzcoa (ES)
(74) Representative: ABG Intellectual Property Law, S.L.

(57) **Abstract**

The present invention relates to the use of mixed oxides of formula Co₃₋ₓNiₓO₄, wherein 0 < x < 1, for thermochemical storage of heat, as well as to methods for thermochemical heat storage comprising the use of said Ni-Co mixed oxides.

## Description

### FIELD OF THE INVENTION

The present invention relates to the use of mixed Ni-Co oxides for thermochemical energy storage applications.

### BACKGROUND OF THE INVENTION

The world transition to a decarbonized energy system is underway, which will radically transform how the energy is generated, distributed, stored and consumed. This energy transition will require a big share of renewable energy power generation and an increase of energy efficiency in the industrial processes, among other actions to be taken. In this scenario, the large-scale energy storage is a key factor because it makes conceivable a big share of renewables where their electrical production generally does not coincide with the electricity demand. Especially, thermal energy storage (TES) systems will play a major role not only for renewables integration but also to increase the energy efficiencies in industrial process by the reuse of the stored residual heat coming from the same process. Among TES technologies, thermochemical energy storage (TcES) is considered as the most promising technology due to its high energy storage capacity, possible heat storage at room temperature, long-term storage without a significant heat loss, and heat release at a constant temperature which is adjustable by the reaction conditions. This storage technology also allows working at high temperatures, outside the stability range of molten salts (565 °C), which is today the only high temperature thermal storage system implemented commercially in concentrated solar power (CSP) plants.

In TcES, the enthalpy of reversible chemical reaction is exploited, so that an endothermic reaction is used to store heat when it is available (e.g. during on-sun hours) and an exothermic reaction is used to release heat when it is needed (e.g. when the solar resource is scarce such as at night). Thermochemical heat storage involves three steps: charge, storage and discharge. During charge, the energy provided by the sun or a different heat source is used to perform the endothermic reaction. The reaction products are stored and finally used during the discharge step in order to release the stored energy through the exothermic reaction.

Among the possible reversible gas-solid reactions with substantial thermal effects, the utilization of a pair of reduction-oxidation (Red-Ox or redox) reactions involving solid oxides of multivalent metals using air both as the heat transfer fluid and as reactant (O₂) is the most promising systems for high temperature TES applications such as concentrated solar power technologies and industrial waste heat recovery. A general reaction pathway or Red-Ox of oxides of multivalent metals for energy storage can be described as follows:
Reduction: MₓO_{y} → MₓO_{y-1} + ½O₂ ΔH > 0
Oxidation: MₓO_{y-1}+ ½O₂ → MₓO_{y} ΔH < 0

A reduction reaction occurs in which the metal oxides are reduced at a high temperature with the assistance of external thermal energy. Later, the reduced metal oxides are oxidized to the initial state meanwhile the stored energy is released.

Thus, this Red-Ox system requires suitable materials for operation in terms of complete reaction reversibility, suitable reaction temperature, high storage density, high reaction enthalpy, no-toxicity and good thermal stability during cycling in the operation temperature range [Agrafiotis, C. et al., Solar Energy, 2005, 114, 440-458; and Agrafiotis, C. et al., Solar Energy, 2014, 102, 189-211].

Metal oxides have been identified as favored materials due not only to their high operating temperature ranges and high reaction enthalpies, but also to some extra benefits such as longer storage periods at ambient temperature and utilization of air at the same time as a reactant and a heat transfer fluid [Dizaji, H. et al., Renew. Sustain. Energy Rev., 2018, 98, 9-26; Deutsch, M. et al., Appl. Energy, 2016, 183, 113-120; and Wu, S. et al., Energy Convers. Manag., 2018, 168, 421-453].

Although the list of metal oxides is huge, only a few materials fulfill the necessary requirements (in terms of energy density, reversibility, kinetics and costs) to be considered as potentially suitable materials for thermochemical energy storage application. Examples of these metal oxides are Co₃O₄, BaO, Mn₂O3, CuO, Fe₂O₃, Mn₃O₄ and V₂O₅ [Agrafiotis, C. et al., Solar Energy, 2014, 102, 189-211]. In this context, it has been reported that Co₃O₄/CoO undergoes reduction around 900°C, e.g. according to Block et al. [Thermochim. Acta, 2014, 577, 25-32] the reduction takes place at an onset temperature of 915°C with an enthalpy of 575 J/g. Other pure metal oxides have also been described in the prior art, but these have also high reduction temperatures. Examples of these pure metal oxides are Fe₃O₄/Fe₂O₃, which has been reported to undergo reduction reaction at 1392 °C with an enthalpy of 599 J/g [Block, T. et al., Thermochim. Acta, 2014, 577, 25-32]; CuO/Cu₂O, which has been reported to undergo reduction reaction at 1043 °C with an enthalpy of 652 J/g [Block, T. et al., Sol. Energy, 2016, 126, 195-207]; and Mn₂O₃/Mn₃O₄, which has been reported to undergo reduction reaction at 942°C with an enthalpy of 231 J/g [Block, T. et al., Sol. Energy, 2016, 126, 195-207]. One of the most remarkable characteristics of the redox cycles of these metal oxides, as in the case of cobalt oxides, is that the direct and inverse reactions occur at different temperatures, so that reduction of metal oxides takes place at higher temperatures than the re-oxidation of the reduced phase. In the manganese oxide case, the difference between the reduction and the oxidation temperature is of about 200 °C [Abedin, A.H. et al., The Open Renewable Energy Journal, 2014, 4, 42-46] and for cobalt oxide is of about 50°C, depending on the material used and the heating ramp [Abedin, A.H. et al., The Open Renewable Energy Journal, 2014, 4, 42-46; Carrillo, A.J. et al., J. Mater. Chem. A., 2014, 2, 19435-19443; and Block, T. et al., Thermochim. Acta., 2014, 577, 25-32].

Among the above mentioned metal oxides, Co₃O₄/CoO is widely accepted as the most promising redox couple for high-temperature redox energy storage, primarily owing to its high energy storage density and excellent reversibility [Wu, S. et al., Energy Convers. Manag., 2018, 168, 421-453]. Moreover, cobalt oxide presents a good cyclic stability, being able to support 100 cycles without great energy losses [Agrafiotis, C. et al., Solar Energy, 2015, 114, 440-458; Agrafiotis, C. et al., Solar Energy, 2014, 102, 189-211; and Agrafiotis, C. et al., Solar Energy, 2015, 114, 459-475]. However, the high cost of cobalt oxide and its high reduction temperature are the main drawbacks for the use of this metal oxide couple in energy storage systems.

In order to overcome these drawbacks, doping of pure metal oxides by other metal oxides have been investigated [Agrafiotis, C. et al., Sol. Energy, 2016, 139, 695-710; Block, T. et al., Thermochim. Acta, 2014, 577, 25-32; Block, T. et al., Sol. Energy, 2016, 126, 195-207; and Carrillo, A.J. et al., Sol. Energy Mater. Sol. Cells, 2014, 123, 47-57]. In particular, the addition of Fe, Cr or Al to cobalt oxide has been shown to provide some benefits to the cobalt oxide redox couple [Wu, S. et al., Energy Convers. Manag., 2018, 168, 421-453]. However, it has also been reported that the addition of Ni, Mg, Cu or Na to cobalt oxide had no positive effects on the performance [Wu, S. et al., Energy Convers. Manag., 2018, 168, 421-453; Dizaji, H. et al., Renew. Sustain. Energy Rev., 2018, 98, 9-26; and Agrafiotis, C. et al., Solar Energy, 2014, 102, 189-211]. As an example of the absence of advantages, it has been described that NiCo₂O₄, resulting from the addition of Ni to cobalt oxide, had approximately the same reduction temperature as the pure cobalt oxide [Agrafiotis, C. et al., Solar Energy, 2014, 102, 189-211].

In view of the above, there is a need of new materials suitable for thermochemical energy storage, in particular for application in concentrated solar power technologies and industrial waste heat recovery.

### SUMMARY OF THE IVENTION

The inventors have surprisingly found that the substitution of Co atoms by Ni atoms in cobalt oxide to provide mixed Co-Ni oxides of formula Co₃₋ₓNiₓO₄ (0 < × < 1) leads to a significant decrease of the redox temperature, as shown in the examples. In addition, the mixed Co-Ni oxides of the invention have suitable thermal cyclability, conversion ratio and stability for their use in thermochemical energy storage methods and devices, as also shown in the examples.

Thus, in a first aspect, the present invention relates to the use of a mixed oxide of formula Co₃₋ₓNiₓO₄, wherein 0 < x < 1, for thermochemical storage of heat.

In a second aspect, the present invention relates to a method for thermochemical storage of heat comprising heating a mixed oxide of formula Co₃₋ₓNiₓO₄ as defined in the first aspect at a temperature equal to or greater than the reduction temperature of the mixed oxide thereby producing an endothermic reduction of said mixed oxide.

In a third aspect, the invention relates to a method for storing and releasing heat comprising:
a) carrying out the method defined in the second aspect, and
b) reducing the temperature of the product obtained in step a) to a temperature less than the reduction temperature of the mixed oxide of formula Co₃₋ₓNiₓO₄ heated in step a) in the presence of oxygen thereby producing an exothermic oxidation of the reduced product obtained in step a) and releasing heat.

In a fourth aspect, the invention relates to a thermochemical energy storage device comprising a mixed oxide of formula Co₃₋ₓNiₓO₄ as defined in the first aspect.

### DESCRIPTION OF THE DRAWINGS

Figure 1 shows the evolution of X-ray powder diffraction patterns of Co₃₋ₓNiₓO₄ (0 ≤ x ≤ 1) with x=0, 0.2, 0.4, 0.6, 0.8, 1. The bullet (*) indicates the peaks corresponding to NiO phase.
Figure 2 shows the scanning electron microscope (SEM) images of the Co₃O₄, Co₂.₈Ni₀.₂O₄, Co_{2.6}Ni_{0.4}O₄, Co.₄Ni_{0.6}O₄, Co₂.₂Ni₀.₈O₄ and Co₂NiO₄ materials.
Figure 3 shows TGA (thermogravimetric analysis) experimental reduction step of the studied materials under air atmosphere with a heating/cooling rate of 10°C/min.
Figure 4 shows the TGA reduction/oxidation cycles for the studied materials between 600°C and 1000°C under air atmosphere with a heating/cooling rate of 10°C/min.
Figure 5 shows the TGA results of 40 reduction/oxidation cycles for Co₂.₄Ni₀.₆O₄ performed between 600°C and 1000°C under air atmosphere with a heating/cooling rate of 10°C/min.

### DETAILED DESCRIPTION OF THE INVENTION

In the first aspect, the present invention relates to the use of a mixed oxide of formula Co₃₋ₓNiₓO₄, wherein 0 < x < 1, for thermochemical storage of heat.

In the context of the present invention, the term "mixed oxide" refers to an oxide of two different metals, in the present case an oxide of cobalt and nickel. Said mixed Ni-Co oxides can also be named nickel cobaltites.

In the mixed oxide of formula Co₃₋ₓNiₓO₄, x is a number having a value greater than 0 (x>0) and less than 1 (x<1), i.e. 0 < x < 1, preferably wherein 0 < x < 0.8, more preferably wherein 0.2 < x < 0.8, more preferably wherein 0.3 < x < 0.7, even more preferably wherein x is from about 0.4 to about 0.6, even more preferably wherein 0.4 ≤ x ≤ 0.6. In a particular embodiment, x is about 0.4 or about 0.6. In another particular embodiment, x is about 0.4, preferably it is 0.4. In another particular embodiment, x is about 0.6, preferably it is 0.6.

In the context of the present invention, the term "about" refers to ±10% of the value it characterizes, preferably ±5%.

In a preferred embodiment, the Ni-Co mixed oxide is selected from the group consisting of CO₂.₂Ni₀.₈O₄, Co.₄Ni_{0.6}O₄, Co_{2.6}Ni_{0.4}O₄, and Co₂.₈Ni₀.₂O₄. In a particular embodiment, the Ni-Co mixed oxide is selected from the group consisting of Co.₄Ni_{0.6}O₄, Co_{2.6}Ni_{0.4}O₄, and Co₂.₈Ni₀.₂O₄. Particularly preferred Ni-Co mixed oxides are Co₂.₆Ni_{0.4}O₄ and Co₂.₄Ni_{0.6}O₄. Thus, in one preferred embodiment, the mixed oxide is selected from the group consisting of Co₂.₆Ni_{0.4}O₄ and Co₂.₄Ni_{0.6}O₄. In one particular embodiment, the mixed oxide is Co_{2.6}Ni_{0.4}O₄. In another particular embodiment, the mixed oxide is Co_{2.4}Ni_{0.6}O₄.

The Ni-Co mixed oxides used in the present invention may by synthesized by the sol-gel method following the Pechini route. The sol-gel process is a low temperature preparation method, which uses chemical precursors being able to produce ceramic materials with high purity and best homogeneity than the high temperature conventional solid-state method. This method allows synthesizing polycrystalline materials with specific characteristics regarding the composition and purity. The word "sol" refers to the colloidal suspension formed by molecular precursors, while, the word "gel" refers to the inorganic network structure formation [Hench, L. L. et al., Chem. Rev., 1990, 90, 33-72]. Pechini method is a well-known sol-gel route of preparation in order to control the particle morphology, porosity, grain size and shape. The process is based on the ability of citric acid to chelate metallic ions which can undergo poly-esterification with polyhydroxyl alcohols such as ethylene glycol to form a polymeric precursor [Ansari, F. et al., J. Magn. Magn. Mater., 2016, 401, 362-369]. In particular, Co(NO₃)₂·6H₂O and Ni(NO₃)₂.6H₂O may be dissolved in ethylene glycol under gentle magnetic stirring to afford a homogeneous solution. The amounts of Co(NO₃)_{2·}6H₂O and Ni(NO₃)_{2·}6H₂O are selected to provide the desired Ni/Co ratio in the final Ni-Co mixed oxide. For example, for the synthesis of 1 mole of Co₂.₆Ni_{0.4}O₄ 2.6 mole of Co(NO₃)_{2·}6H₂O and 0.4 mole of Ni(NO₃)_{2·}6H₂O are used. Subsequently, citric acid was added into the reaction mixture under vigorous stirring for about 60 min. Subsequently, the reaction mixture may be dried overnight at about 180°C. The obtained powders may be ground to increase their homogeneity and then calcined in air at about 400 °C for about 10 hours.

In a preferred embodiment, the mixed oxide of formula Co₃₋ₓNiₓO₄ is in powder or sintered bulk or foam forms or impregnated in support structures.

The term "powder" refers to solid particles having an average diameter less than 100 µm, preferably less than 50 µm, preferably less than 10 µm, preferably less than 5 µm, preferably less than 1 µm, more preferably from 0.01 to 100 µm, more preferably from 0.1 to 50 µm, more preferably from 0.1 to 10 µm, more preferably from 0.1 to 5 µm, more preferably from 0.1 to 1 µm, even more preferably from 0.5 to 1 µm.

The average diameter of the particles and may be determined by SEM technique where an average value was determined by the measurement of the diameter of at least 200 particles. For each particle, a random diameter is determined.

The term "sintered bulk" refers to compacted and formed solid mass of the material (mixed oxide used in the invention) by heat or pressure without melting it. Sintering acts to bond particles together or to reduce the interparticle spaces, i.e. prior to sintering the particles flow easily while after sintering the particles are bonded into a solid body.

The term "foam" refers to the material (mixed metal oxide used in the invention) in the form of a porous structure comprising an interconnected macroporous structure formed by agglomeration of particles having an average size of at least 50 nm, with or without mesoporous wall structure, the mesoporous wall structure having mesopores with a pore size or an interparticle space ranging from 2 nm to 50 nm.

The term "impregnated in support structures" refers to the presence of the material (mixed oxide used in the invention) inside the pores or deposited on the wall of a matrix. Examples of matrix materials are iron silicate, bentonite, silica gel, cordierite and alumina.

In the context of the present invention, the expression "thermochemical storage of heat" or "thermochemical heat storage" or "thermochemical energy storage" or "thermochemical storage of energy" or "TcES" refers to the exploitation of energy (heat) to power an endothermic chemical reaction, in the present invention the reduction of the metal oxide, allowing the accumulation of said energy (heat). Subsequently, this energy may be recovered by the reverse exothermic oxidation reaction, in particular in the presence of oxygen, yielding the metal oxide in its original oxidation state and releasing energy in the form of heat. A general reaction pathway or Red-Ox of Co₃₋ₓNiₓO₄ for energy storage can be described as follows:
Reduction: Co₃₋ₓNiₓO₄ → Co₃₋ₓNiₓO₃ + ½O₂ ΔH > 0
Oxidation: Co₃₋ₓNiₓO₃ + ½O₂ → Co₃₋ₓNiₓO₄ ΔH < 0

In particular, a heat transfer fluid is used to transfer the released heat in a heat exchanger. Preferably, air is used as the heat transfer fluid. This is particularly advantageous since it allows using the same fluid for heat transfer and as reactant in the oxidation reaction, since air comprises oxygen.

The heat triggering the reduction reaction may come from any suitable heat source, preferably solar heat or industrial waste heat, more preferably solar heat. The solar heat may be concentrated by concentrating solar power technologies, i.e. by mirrors or lenses that concentrate a large area of solar thermal energy (heat) onto a small area. Industrial waste heat refers to heat rejected from industrial processes, in which energy (mostly heat and electricity) is used to produce high-added value products (not energy). This waste heat is generally included in a thermal carrier. The most common thermal carriers are gaseous streams (e.g. exhaust gas, flaring gas, low-quality steam, cooling air, etc.), liquid streams (e.g. hot oil, cooling water, etc.) and solids (e.g. commodities and products, such as hot steel). The largest amounts of waste heat in industries are usually found in food, tobacco, pulp, paper, basic metals, chemical industry and non-metallic minerals. For the reduction reaction to take place, the heat needs to have a temperature equal to or greater than the reduction temperature (T_{red}) of the metal oxide.

The "reduction temperature" or "T_{red}" is the temperature at which the metal oxide is reduced. This temperature can be determined as the onset temperatures of TGA reduction curve where the material starts losing mass using the experimental procedure described in the thermodynamic study of the examples.

Preferably, the heat has a temperature above 600 °C, preferably above 650 °C, preferably above 700 °C, preferably above 800 °C, more preferably above 900°C, more preferably between 600 °C and 1940 °C, more preferably between 600 °C and 1000 °C, more preferably between 650 °C and 1000 °C, more preferably between 700 °C and 1000 °C, more preferably between 800 °C and 1000 °C, even more preferably between 900 °C and 1000 °C. Upon providing this heat to the metal oxide of the invention, said metal oxide is reduced and the heat is stored in the material.

The heat is stored in the metal oxide while keeping the temperature of the system above the reduction temperature (T_{red}) of the metal oxide. The heat may also be stored at lower temperatures if oxygen is removed from the atmosphere surrounding the metal, e.g. by replacing air by an inert atmosphere such as nitrogen or argon, preferably nitrogen.

When the heat (stored in the metal oxide) is needed, the reverse exothermic oxidation reaction of the reduced metal is performed. In the oxidation reaction, the reduced metal oxide is oxidized in the presence of oxygen with the release of heat. Said oxidation takes place upon reducing the temperature of the reduced metal oxide. Said reduction of the temperature may be active (cooling) or passive (allowing to cool). The temperature is reduced to the temperature less than the reduction temperature (T_{red}) of the metal oxide. Preferably, the temperature is reduced (actively or passively) to below 900°C, preferably to below 850 °C, preferably to below 800 °C, preferably to below 750 °C, preferably to below 700 °C, preferably to below 650 °C, preferably to below 600 °C, preferably to below 550 °C, preferably to below 500 °C, more preferably to about 500 °C. In particular the temperature is reduced (actively or passively) to between 500 °C and 900 °C, more preferably between 500 °C and 850 °C, more preferably between 500 °C and 800 °C, more preferably between 500 °C and 750 °C, more preferably between 500 °C and 700 °C, even more preferably between 500 °C and 650 °C.

In a second aspect, the invention relates to a method for thermochemical storage of heat comprising heating a mixed oxide of formula Co₃₋ₓNiₓO₄ as defined with respect to the firs aspect at a temperature equal to or greater than the reduction temperature of the mixed oxide thereby producing an endothermic reduction of said mixed oxide.

The terms used in the definition of this method have the same meaning as defined above for the use of the Ni-Co mixed oxides.

In particular, the method comprising heating the mixed oxide of formula Co₃₋ₓNiₓO₄ (0 < × < 1). Said mixed oxide is an oxide as previously defined.

The heating is carried out at a temperature equal to or greater than the reduction temperature of the mixed oxide. Said reduction temperature can be determined as previously explained. In particular, the heating is carried out above 600 °C, preferably above 650 °C, preferably above 700 °C, preferably above 800 °C, more preferably above 900 °C, more preferably between 600 °C and 1940 °C, more preferably between 600 °C and 1000 °C, more preferably between 650 °C and 1000 °C, more preferably between 700 °C and 1000 °C, more preferably between 800 °C and 1000 °C, even more preferably between 900 °C and 1000 °C. Upon heating the metal oxide of the invention, said metal oxide is reduced and the heat is stored in the material.

The heating is preferably carried out with heat obtained from a source of solar origin or with waste industrial heat. These types of heat and examples thereof correspond to those already described above with respect to the first aspect.

In a preferred embodiment, the heat is from a source of solar origin, preferably from a concentrated solar power system.

As previously explained, the heat is stored in the metal oxide while keeping the temperature of the system above the reduction temperature (T_{red}) of the metal oxide. The heat may also be stored at lower temperatures if oxygen is removed from the atmosphere surrounding the metal, e.g. by replacing air by an inert atmosphere such as nitrogen or argon, preferably nitrogen.

When the heat (stored in the metal oxide) is needed, the reverse exothermic oxidation reaction of the reduced metal is performed.

Thus, in a third aspect, the present invention relates to a method for storing and releasing heat comprising:
a) carrying out the method defined in the second aspect, and
b) reducing the temperature of the product obtained in step a) to a temperature less than the reduction temperature of the mixed oxide of formula Co₃ₓNiₓO₄ heated in step a) in the presence of oxygen thereby producing an exothermic oxidation of the reduced product obtained in step a) and releasing heat.

In step a) upon heating the metal oxide of the invention, said metal oxide is reduced and the heat is stored in the material. This step of heating, step a), has been described in detail above with respect to the second aspect and all the definitions as well as the preferred and particular embodiments defined therein are also incorporated to this third aspect.

When the heat (stored in the metal oxide) is needed, the reverse exothermic oxidation reaction of the reduced metal is performed.

In the oxidation reaction, the reduced metal oxide obtained in step a) is oxidized in the presence of oxygen with the release of heat. Said oxidation takes place upon reducing the temperature of the reduced metal oxide obtained in step a). This oxidation produces the mixed oxide in its original oxidation state, i.e. Co₃₋ₓNiₓO₄, and releases heat. This corresponds to step b). Once the mixed oxide has returned to its initial oxidation state it can be used again in the methods of the invention.

In step b), the temperature is reduced to the temperature less than the reduction temperature (T_{red}) of the (non-reduced) metal oxide Co₃₋ₓNiₓO₄. Said reduction temperature can be determined as previously explained. The step of reducing the temperature in step b) may be active (cooling) or passive (allowing to cool). Preferably, the temperature is reduced (actively or passively) to below 900 °C, preferably to below 850 °C, preferably to below 800 °C, preferably to below 750 °C, preferably to below 700 °C, preferably to below 650 °C, preferably to below 600 °C, preferably to below 550 °C, preferably to below 500 °C, more preferably to about 500 °C. In particular the temperature is reduced (actively or passively) to between 500 °C and 900 °C, more preferably between 500 °C and 850 °C, more preferably between 500 °C and 800 °C, more preferably between 500 °C and 750 °C, more preferably between 500 °C and 700 °C, even more preferably between 500 °C and 650 °C.

In a preferred embodiment, the heating of step a) is carried out up to a temperature in the range from 900 to 1000 °C and the reduction of temperature of step b) is carried out down to a temperature in the range from 500 °C to 650 °C.

The heat released in step b) may be in direct or indirect contact with a heat transfer medium, preferably in direct contact.

Heat transfer mediums may be fluids such as air. The use of air as the heat transfer medium is particularly advantageous when it is in direct contact with the mixed Ni-Co oxide since it also serves to provide the oxygen (reactant) necessary to carry out the oxidation reaction of step b).

Thus, in a preferred embodiment the heat transfer medium is air and/or the oxygen used as reactant in step b) is comprised in air, preferably, the heat transfer medium is air and the oxygen used as reactant in step b) is comprised in air.

In a fourth aspect, the present invention relates to a thermochemical energy storage device comprising a mixed oxide of formula Co₃₋ₓNiₓO₄ as defined in the first aspect.

The term "thermochemical energy storage device" refers to system where the materials will be reduced and oxidized. The system can be (i) a reactor where a packed bed of the material, in form of powder or sintered bulk; (ii) a system where the active material is structured in foam form or impregnated in support structures; or (iii) a reactor where the material is moving (moving bed).

The term "packed bed" refers to filling a reactor with the packing material with a specific void fraction above 30% and said material does not substantially move along the reactor where the heat transfer fluid (gas) is allowed to pass through the material during charging and discharging processes, whereas in "moving bed", the material moves along the reactor to be in contact with the heat transfer fluid (gas) during reduction and oxidation processes.

The terms "powder", "sintered bulk", "foam" and "impregnated in support structures" have been previously defined.

The following examples are merely illustrative of certain embodiments of the invention and cannot be considered as restricting it in any way.

### Examples

### Example 1. Synthesis of oxides of formula Co₃₋ₓNiₓO₄ wherein 0 < x ≤ 1

The following mixed oxides have been synthesized: Co₂.₈Ni₀.₂O₄, Co_{2.6}Ni_{0.4}O₄, Co₂.₄Ni₀.₆O₄, Co₂.₂Ni₀.₈O₄ and Co₂NiO₄, the latter being used for comparative experiments. The correct stoichiometry of the synthetized samples was confirmed by means of X-ray spectrometry (EDX) analysis and Rietveld refinement of X-ray diffractograms.

3-x mole of Co(NO₃)_{2·}6H₂O and x mole of Ni(NO₃)₂·6H₂O nitrates were used for the preparation of 1 mole of each material. Initially, the primary precursors were dissolved in 10 mL ethylene glycol under gentle magnetic stirring to afford a homogeneous solution. Subsequently, 581 mg citric acid was added into the reaction mixture under vigorous stirring for 60 min. The reaction mixture was dried overnight at 180°C. The obtained powders were ground in an agate mortar to increase their homogeneity and then calcined in air at 400°C for 10 hours.

### Example 2. Characterization by X-ray powder diffraction pattern.

The mixed oxides Co₂.₈Ni₀.₂O₄, Co_{2.6}Ni_{0.4}O₄, Co₂.₄Ni₀.₆O₄, Co₂.₂Ni₀.₈O₄ and Co₂NiO₄ synthesized in Example 1, as well as the pure oxide Co₃O₄ , received from Alfa-Aesar with a purity of 99.7% and reference number is 40184, have been characterized by X-ray diffraction (XRD).

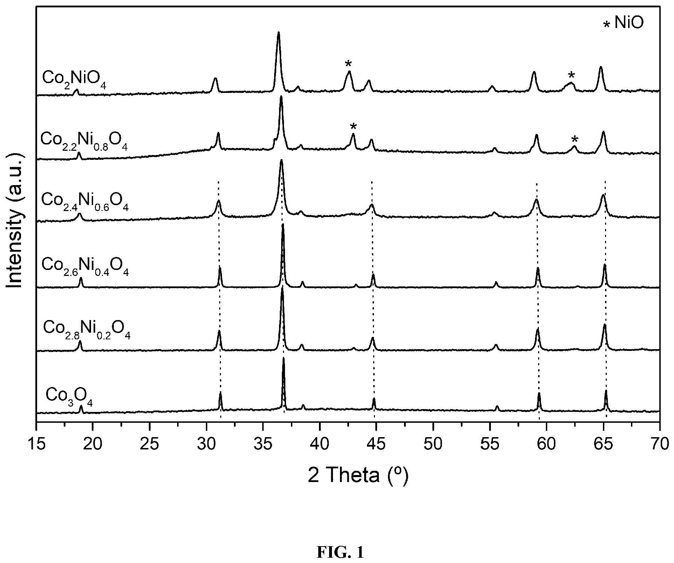

XRD were performed in a Bruker D8 Advance X-ray diffractometer equipped with an LYNXEYE detector using CuKα1 radiation (λ= 1.5418 Å) was used. The diffractograms were collected in the 2θ range from 15 to 70° with a step size and a counting time of 0.02° and 1 min, respectively. The obtained X-ray powder diffraction patterns are provided in Figure 1.

Based on the analysis of the obtained X-ray diffractograms, it was observed similar patterns for Co₃O₄, Co₂.₈Ni₀.₂O₄, Co_{2.6}Ni_{0.4}O₄, and Co₂.₄Ni₀.₆O₄ materials, with continuous changes in the form of the peaks and their positions while increasing the amount of nickel in the structure.

In order to confirm the presence of pure single structure with the correct stoichiometry for each material, the Rietveld refinement of the structural models was performed using the WinPlotr/FullProf package [Rodriguez-Carvajal, J., Physica B: Condensed Matter, 1993, 192, 55-69]. The refined parameters were: background coefficients, scale factor, lattice constants, atomic positions, atomic occupation, isotropic independent atomic displacement parameters, zero shift, peak profile and asymmetry parameters. Table 1 summarizes the space group, room-temperature unit-cell parameters and unit-cell volume obtained for Co₃O₄, Co₂.₈Ni₀.₂O₄, Co_{2.6}Ni_{0.4}O₄, Co₂.₄Ni₀.₆O₄, Co₂.₂Ni₀.₈O₄ and Co₂NiO₄ materials. The obtained values for unit-cell parameters and unit-cell volume increase linearly with the increase of the Ni amount, which is considered as a clear evidence that the Vegard's law holds for this solid solution Co₃₋ₓNiₓO₄ at least for those materials with x value from 0 to 0.6.

**Table 1. Space group, room-temperature unit-cell parameters and unit-cell volume of the pure mixed structures of Co-Ni system Co₃₋ₓNiₓO₄ for x from 0 to 1.**

| *Material* | *Space group* | *a (Å)* | *V (Å³)* |
|---|---|---|---|
| Co₃O₄ | Fd-3m | 8.0584(1) | 523.29(4) |
| Co₂.₈Ni₀.₂O₄ | Fd-3m | 8.0735(1) | 526.24(2) |
| CO_{2.6}Ni_{0.4}O₄ | Fd-3m | 8.0948(1) | 530.43(8) |
| Co_{2.4}Ni_{0.6}O₄ | Fd-3m | 8.1028(1) | 531.99(2) |
| Co₂.₂Ni₀.₈O₄ | Fd-3m | 8.1062(1) | 532.66(2) |
| Co₂NiO₄ | Fd-3m | 8.0328(1) | 518.32(3) |

### Example 3. Morphological characterization

The mixed oxides Co₂.₈Ni₀.₂O₄, Co_{2.6}Ni_{0.4}O₄, Co₂.₄Ni₀.₆O₄, Co₂.₂Ni₀.₈O₄ and Co₂NiO₄ synthesized in Example 1, as well as the pure oxide Co₃O₄, received from Alfa-Aesar with a purity of 99.7% and reference number is 40184, have been characterized by scanning electron microscope (SEM).

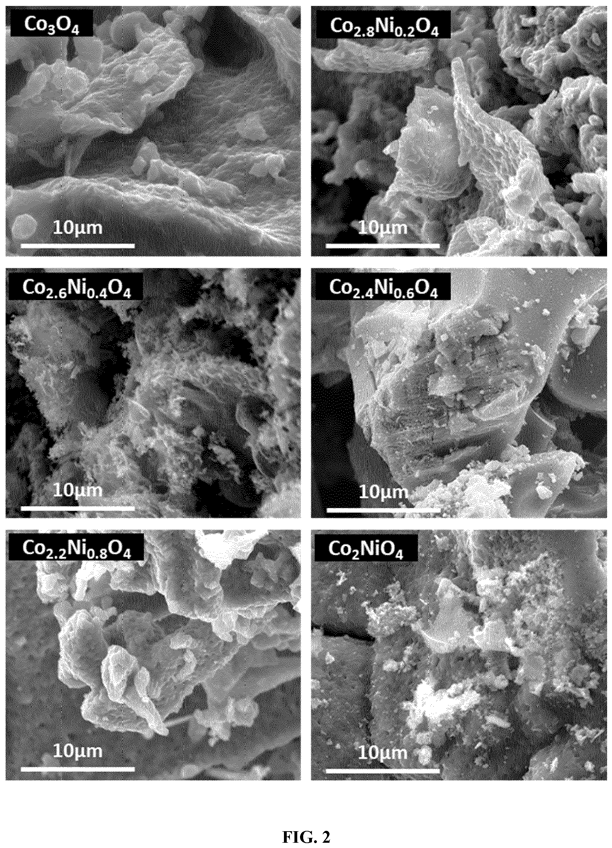

A Quanta 200 FEG scanning electron microscope (SEM) equipped with energy-dispersive X-ray spectroscopy (EDX) was used. For an optimum image generation, the SEM microscope was operated in high vacuum mode at accelerating voltage of 30 kV. Then, the images were collected by using the secondary electron detector (ETD). To perform the analysis, powders of the polycrystalline samples were placed on a graphite holder using double-sided carbon tape. The correct stoichiometry of the studied samples was confirmed by EDX analysis, with an error of around 5%. The obtained SEM images are shown in Figure 2.

As it can be seen in Figure 2, Co₃O₄, Co₂.₈Ni₀.₂O₄, Co₂.₂Ni₀.₈O₄ and Co₂NiO₄ materials show similar agglomerate morphologies made of particles with size around 0.80 µm. Meanwhile, Co₂.₆Ni_{0.4}O₄ and Co₂.₄Ni₀.₆O₄ materials exhibit different morphologies where the first one has a foamy appearance while the second one has a dense structure.

### Example 4. Thermodynamic study

Thermogravimetric analyses have been done in order to observe the thermal behavior of the prepared mixed metal oxides and to determine the reduction temperature T_{red}, reaction reversibility and stability of the samples. The T_{red} can be determined as the onset temperatures of TGA reduction curve where the material starts losing mass and the conversion ratio is calculated according to the following equation: $Conversion ratio \left(%\right) = \left(\frac{{m}_{0} - {m}_{f}}{{m}_{0}}\right) \times \frac{M \left({O}_{2}\right)}{2 M \left({Co}_{3 - x}{Ni}_{x}{O}_{4}\right)} \times 100$ where mo and m_{f} are the initial and final masses of the sample and M is the molecular mass.

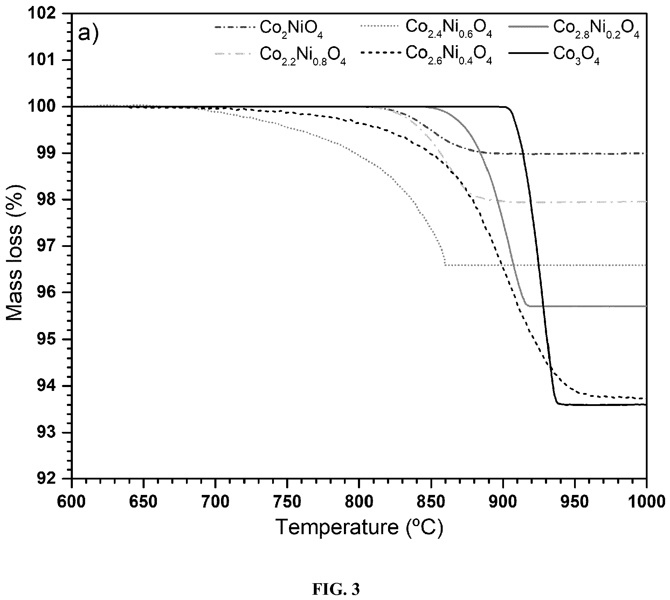

A NETZSCH/TG 209 F1 Libra instrument was used in the temperature range from 600 °C to 950 °C with a heating/cooling rate of 10 °C/min in air atmosphere and a flow rate of 60 ml/min. Figure 3 shows the TGA reduction curves obtained for Co₃O₄, Co₂.₈Ni₀.₂O₄, Co_{2.6}Ni_{0.4}O₄, Co_{2.4}Ni_{0.6}O₄, Co₂.₂Ni₀.₈O₄ and Co₂NiO₄ materials between 600°C and 950°C. A different behavior was observed for each material in regard to the reduction temperature, reaction kinetics and mass loss. As a general observation, the incorporation of the nickel in the structure leads to a significant decrease in the reduction temperature with respect to the pure cobalt oxide. The reduction temperatures obtained for Co₂.₈Ni₀.₂O₄, Co_{2.6}Ni_{0.4}O₄, Co_{2.4}Ni_{0.6}O₄, and Co₂.₂Ni₀.₈O₄ are 852°C, 735°C, 685° and 830 °C, which represent a significant decrease in the reduction temperature when compared to the pure cobalt oxide Co₃O₄ (906 °C). In general, adding nickel to the cobalt oxide structure makes the reduction temperature tunable, being able to decrease it from 906°C to 685°C. Table 2 summarizes the reduction temperature, mass loss and reaction conversion ratio obtained for Co₃O₄, Co₂.₈Ni₀.₂O₄, Co_{2.6}Ni_{0.4}O₄, Co.₄Ni_{0.6}O₄, Co₂.₂Ni₀.₈O₄ and Co₂NiO₄ materials.

**Table 2. Reduction temperature and mass loss obtained for Co₃O₄, Co₂.₈Ni₀.₂O₄, Co_{2.6}Ni_{0.4}O₄, Co.₄Ni_{0.6}O₄, Co₂.₂Ni₀.₈O₄ and Co₂NiO₄ materials.**

| *Material* | *T_{red} (°C)* | *Mass loss (%)* | *Conversion ratio (%)* |
|---|---|---|---|
| Co₃O₄ | 906 | 6.4 | 96 |
| Co_{2.8}Ni_{0.2}O₄ | 852 | 4.28 | 64 |
| Co_{2.6}Ni_{0.4}O₄ | 735 | 6.12 | 92 |
| Co_{2.4}Ni_{0.6}O₄ | 685 | 4.45 | 67 |
| Co₂.₂Ni₀.₈O₄ | 830 | 2.05 | 31 |
| Co₂NiO₄ | 830 | 0.72 | 11 |

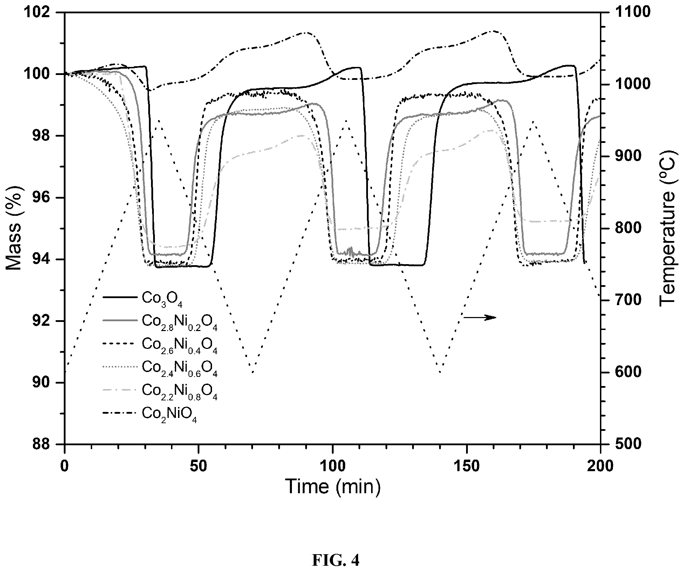

The cyclability of the materials were tested by performing three successive thermal cycles between 600°C and 1000°C under air atmosphere in the TGA equipment. Figure 4 shows TGA reduction/oxidation cycling of the studied materials between 600°C and 1000°C under air atmosphere with a heating/cooling rate of 10°C/min. In the case of Co₃O₄, Co₂.₈Ni₀.₂O₄, Co_{2.6}Ni_{0.4}O₄, Co₂.₄Ni₀.₆O₄ and Co₂.₂Ni₀.₈O₄ materials, the TGA measurements show that upon heating, the reduction took place, which is evidenced by the sample weight loss related to oxygen release and upon cooling, the re-oxidation took place accompanied by sample weight gain. In the case Co₂NiO₄, TGA measurement revealed extremely minor weight losses and gains during the three cycles which indicates that reduction/oxidation took place in only a very small fraction of the material.

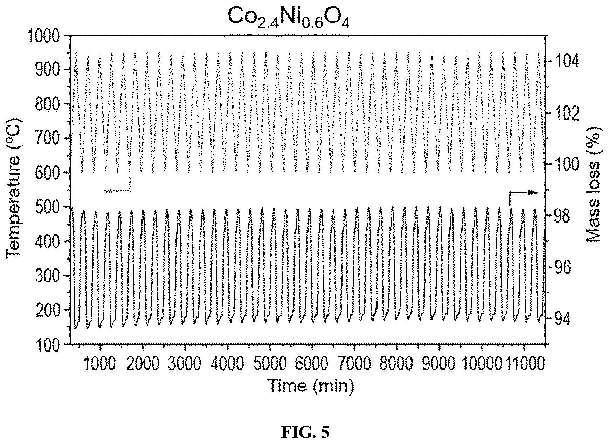

Finally, the cyclability and thermal stability were confirmed for Co₂.₄Ni₀.₆O₄ for at least 40 cycles as shown in Figure 5.

The above reported experimental results show the suitability of these materials for thermochemical storage.

## Claims

1. Use of a mixed oxide of formula Co₃₋ₓNiₓO₄ for thermochemical storage of heat, wherein 0 < x < 1.

2. Use according to claim 1, wherein 0.2 < x < 0.8.

3. Use according to claim 1 or 2, wherein 0.4 ≤ × ≤ 0.6.

4. Use according to claim 1 or 2, wherein the mixed oxide is selected from the group consisting of Co_{2.2}Ni_{0.8}O4, Co.₄Ni_{0.6}O₄, Co_{2.6}Ni_{0.4}O₄, and Co₂.₈Ni₀.₂O₄.

5. Use according to any of claims 1 to 4, wherein the mixed oxide is selected from Co_{2.6}Ni_{0.4}O₄, and Co₂.₄Ni_{0.6}O₄.

6. Use according to any of the preceding claims, wherein the mixed oxide of formula Co₃₋ₓNiₓO₄ is in powder or sintered bulk or foam forms or impregnated in support structures.

7. Method for thermochemical storage of heat comprising heating a mixed oxide of formula Co₃₋ₓNiₓO₄ as defined in any of the preceding claims at a temperature equal to or greater than the reduction temperature of the mixed oxide thereby producing an endothermic reduction of said mixed oxide.

8. Method according to claim 7, wherein the heating is carried out with heat obtained from a source of solar origin or with waste industrial heat.

9. Method according to claim 8, wherein the heat is from a source of solar origin.

10. Method according to claim 9, wherein the source of solar origin is a concentrated solar power system.

11. Method for storing and releasing heat comprising:
a) carrying out the method defined in any of claims 7 to 10, and
b) reducing the temperature of the product obtained in step a) to a temperature less than the reduction temperature of the mixed oxide of formula Co₃₋ₓNiₓO₄ heated in step a) in the presence of oxygen thereby producing an exothermic oxidation of the reduced product obtained in step a) and releasing heat.

12. Method according claim 11, wherein the heat released in step b) is in direct or indirect contact with a heat transfer medium.

13. Method according to claim 11 or 12, wherein the heat transfer medium is air and/or the oxygen of step b) is comprised in air.

14. Method according to any of claims 11 to 13, wherein the heating of step a) is carried out up to a temperature in the range from 900 to 1000 °C and the reduction of temperature of step b) is carried out down to a temperature in the range from 500 °C to 650 °C.

15. Thermochemical energy storage device comprising a mixed oxide of formula Co₃₋ₓNiₓO₄ as defined in any of claims 1 to 6.
